(19) Europäisches Patentamt / European Patent Office / Office européen des brevets

(11) **EP 3 418 682 B1**

(12) **EUROPEAN PATENT SPECIFICATION**

(45) Date of publication and mention
of the grant of the patent:
**04.03.2020  Bulletin 2020/10**

(51) Int Cl.:
*G01B 21/04* *(2006.01)*      *G01B 5/012* *(2006.01)*
*G01B 7/012* *(2006.01)*

(21) Application number: **18178551.0**

(22) Date of filing: **19.06.2018**

(54) **MEASURING METHOD USING TOUCH PROBE**

MESSVERFAHREN UNTER VERWENDUNG EINER BERÜHRUNGSSONDE

PROCÉDÉ DE MESURE UTILISANT UNE SONDE DE CONTACT

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **21.06.2017  JP 2017121371**

(43) Date of publication of application:
**26.12.2018  Bulletin 2018/52**

(73) Proprietor: **Nakamura-Tome Precision Industry
Co., Ltd
Hakusan, Ishikawa 920-2195 (JP)**

(72) Inventor: **NAKAMURA, Yoshikatsu
Hakusan, Ishikawa 920-2195 (JP)**

(74) Representative: **Wunderlich & Heim
Patentanwälte
Partnerschaftsgesellschaft mbB
Irmgardstrasse 3
81479 München (DE)**

(56) References cited:
**US-A1- 2010 132 432      US-A1- 2013 151 001
US-A1- 2016 116 275**

**Description**

BACKGROUND

The present invention relates to a method that uses a touch probe to measure an object to be measured, and that can be suitably used for a machine tool, particularly a multi-tasking machine tool or the like.

In the field of machine tools, for example, a measurement method using a touch probe is used for tasks such as identifying and correcting geometrical errors, dimensioning, centering, and positioning a workpiece.

A touch probe is an instrument to which a stylus that comes into contact with an object to be measured is attached, and which outputs, as a trigger signal, a position at which a tip ball of the stylus comes into contact with the object to be measured.

A touch probe of this type has some kind of variable support structure, such as one in which the stylus is supported on a probe main body at three points, that is intended for the protection of the stylus and the like, while allowing detection of contact of the tip ball of the stylus.

On the other hand, an error is caused by an overshoot that occurs after the tip ball of the stylus comes into contact with the object to be measured until feeding of the stylus is stopped by the resulting trigger signal.

Experiments and studies conducted by the present inventor revealed that the amount of overshoot of a stylus differed depending on the direction in which the tip ball was fed and brought into contact.

This is presumably attributable to the structure which supports the stylus on the probe main body.

JP-A-2016-83729 describes a method in which, to calibrate a touch probe, an amount of correction in each direction in which the touch probe comes into contact with a target ball is obtained.

This method requires correcting also an amount of overshoot that differs among the contact directions, so that calibration takes many man-hours.

US 2013/0151001 A1 and US 2010/0132432 A1 propose to carry out a measurement in a way that the measurement probe is turned so that it always touches the object with the same point.

SUMMARY

An object of the present invention is to provide a measurement method using a touch probe that can improve measurement accuracy.

According to one aspect of the invention, there is provided a measurement method according to claim 1.

Here, the touch probe is supported on a probe main body such that, when the tip ball of the stylus comes away from the object to be measured after coming into contact with the object to be measured, the position of the stylus always returns to the original position with high accuracy. As the contact sensing method, a pressure sensor method, an optical sensor method, an electrical contact method, or the like is employed. In this case, the amount of feeding movement after the tip ball comes into contact with the object to be measured until the tip ball stops is the amount of overshoot. As this amount of overshoot varies in the prior art, correction based on a different amount of overshoot is required for each feed direction.

In the measurement method according to the present invention, the orientation of the tip ball of the stylus is controlled such that the position of a contact point in the tip ball remains constant regardless of the feed direction, which results in substantially the same amount of overshoot.

Therefore, one can record the amount of overshoot in one feed direction and use this amount of overshoot also as the amount of overshoot in other feed directions. Thus, it is possible to perform high-accuracy measurement simply by taking into account the amount of correction of overshoot in a single direction.

The tip ball is axially fed in a forward direction and a reverse direction along the direction of one axis. In this case, the amount of overshoot in the forward direction and the amount of overshoot in the reverse direction are substantially the same. Accordingly, the respective amounts of overshoot during feeding in the forward and reverse directions in the positional measurement of a reference ball can offset each other. This can eliminate the need to make different corrections between the forward and reverse feed directions.

The present invention is effective also in uses such as identification and correction of geometrical errors in a machine tool or a multi-tasking machine tool, such as a machining center and a turning center. In this case, the touch probe is mounted on a tool spindle of a machine tool. The tool spindle can be axially fed and rotationally fed. The object to be measured may be a reference ball attached to a spindle of the machine tool, and the position of the reference ball may be measured.

BRIEF DESCRIPTION OF THE DRAWINGS

Fig. 1-9 illustrate examples not falling under the scope of the claims.

FIG. 1 illustrates an example in which a tip ball is brought into contact from Direction 1.
FIG. 2 illustrates an example in which the position of a reference ball is measured.
FIG. 3 illustrates an example in which the tip ball is brought into contact from Direction 2.
FIG. 4 illustrates a method of measuring an amount of overshoot.
FIG. 5 illustrates a result of measurement of the amount of overshoot.
FIG. 6 illustrates a conventional measurement method.
FIG. 7 illustrates a single-spindle turning center.
FIG. 8 illustrates an opposed-two-spindle turning center.
FIG. 9 illustrates a positional relationship between the reference ball and a touch probe.

DESCRIPTION OF EXEMPLARY EMBODIMENTS

Exemplary embodiments of the invention are described in detail below. Note that the embodiments described below are not intended to unduly limit the contents of the present invention described in the claims. All components described in the embodiments are not necessarily essential components of the present invention.

While the present invention is useful for various measurements, such as dimensional measurement, centering, and positioning of a workpiece, the invention will be described below using measurement of a reference ball attached to a spindle as an example.

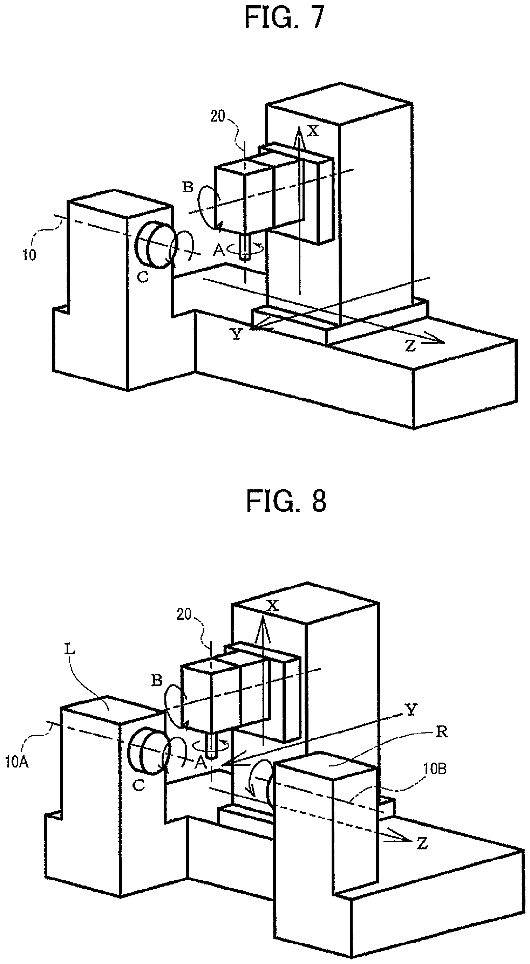

First, FIG. 7 and FIG. 8 schematically show examples of machine tools to which the method of the present invention is applicable. FIG. 7 shows a single-spindle turning center, and FIG. 8 shows a turning center with opposed two spindles on L- and R-sides. In FIG. 7 and FIG. 8, three orthogonal axes of axial feeding are defined as an X-axis, a Y-axis, and a Z-axis, and rotation around an axis parallel to the X-axis is defined as an A-axis, rotation around an axis parallel to the Y-axis is defined as a B-axis, and rotation around an axis parallel to the Z-axis is defined as a C-axis.

A workpiece is held and rotated by a spindle 10 (10A, 10B) that is controlled to rotate on the C-axis. A tool attached to a tool spindle 20 that is controlled to rotate on the A-axis can make a translational motion along the X-, Y-, and Z-axes orthogonal to one another, as well as a rotational motion on the B-axis.

In this type of machine tool, the workpiece is held by the spindle 10 (10A, 10B) and a tool is attached to the tool spindle 20 to process the workpiece by the tool.

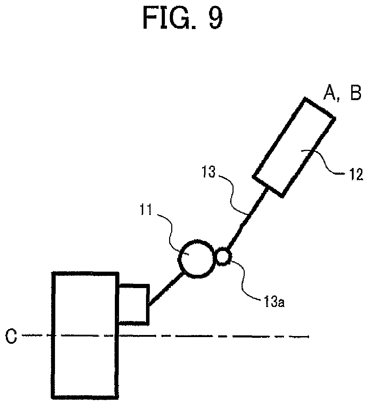

As shown in FIG. 9, for example, a reference ball 11 is installed on an end surface of the spindle 10 (C-axis end surface) on the L-side to identify and correct geometrical errors of the machine tool. A touch probe 12 is attached to the tool spindle 20 that is controlled to translate in the X-, Y-, and Z-axis directions and controlled to rotate on the B-axis. The touch probe 12 can be controlled to rotate also on the A-axis by the tool spindle 20.

In the absence of geometrical errors, the origin of a coordinate system on the workpiece side is defined at the center of the C-axis end surface, and the origin of a coordinate system on the tool side is defined at the intersection between the B-axis and the tool spindle 20.

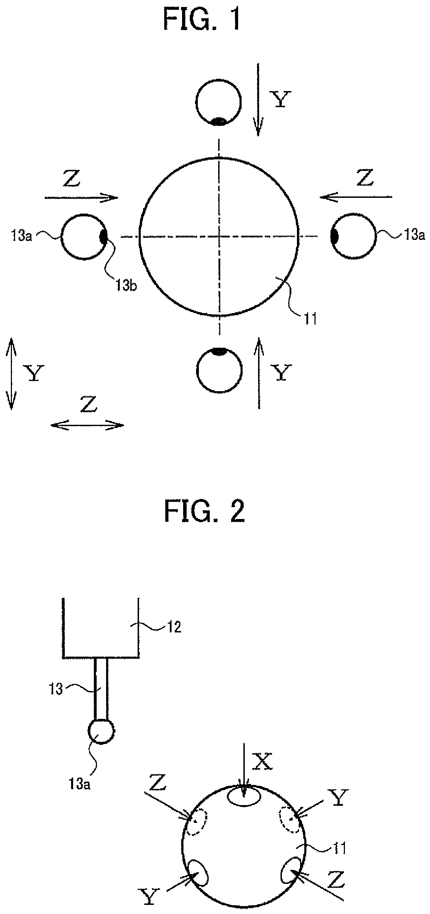

For example, as shown in FIG 2, measurement is required at five points: opposite positions in the Y-axis direction, opposite positions in the Z-axis direction, and a position in the X-axis direction.

In this case, a tip ball 13a of a stylus 13 attached to the touch probe 12 is axially fed toward the reference ball 11 by the tool spindle 20, and the contact position is measured.

In this case, the feeding movement of the tool spindle 20 in the Y-axis direction or the Z-axis direction is stopped by a trigger signal resulting from the tip ball 13a of the stylus 13 coming into contact with the reference ball 11. The amount of feeding movement after the tip ball 13a of the stylus 13 comes into contact with the reference ball 11 until the tip ball 13a stops is the amount of overshoot of the stylus 13 (tip ball 13a).

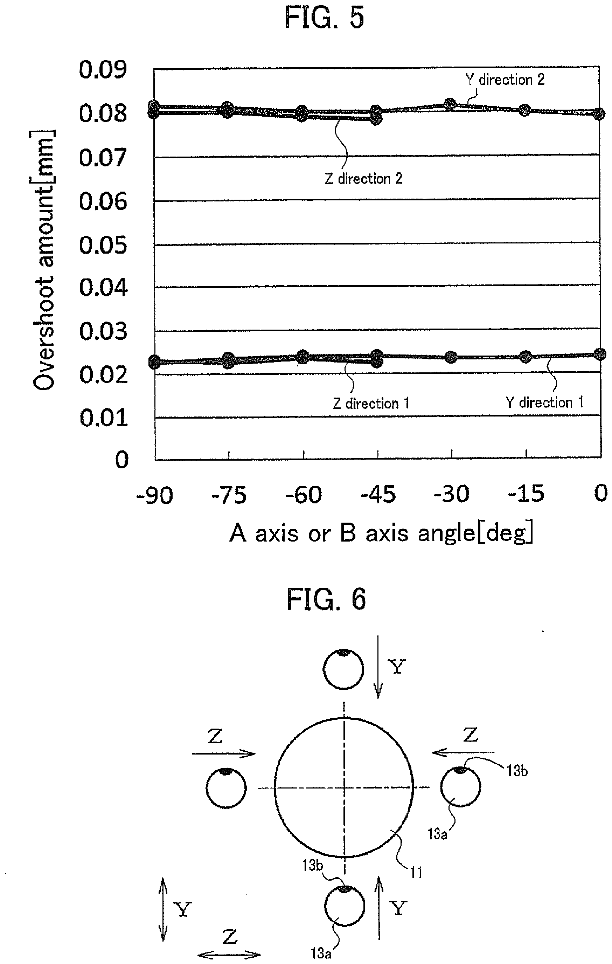

In conventional practice, as shown in FIG 6, the touch probe 12 is controlled to translate in the Y-axis direction or the Z-axis direction, and the tip ball 13a of the stylus 13 is controlled to be fed from each position toward the reference ball 11. In FIG 6, the contact point at which the tip ball 13a comes into contact with the reference ball 11 when the touch probe 12 is fed and moved in an upward direction along the Y-axis is defined as a position 13b. In FIG 6, the orientation of the tip ball 13a remains the same and the position 13b represented by the black mark is kept facing upward during feeding movement in the other three feed directions (the downward direction along the Y-axis and the two opposite directions along the Z-axis).

Then, for example, the position at which one tip ball 13a comes into contact with the reference ball 11 differs among the opposite Y-directions and the opposite Z-directions, resulting in a difference in the amount of overshoot of the stylus 13.

As shown in FIG 1, the tip ball 13a is controlled to rotate on the A-axis or the B-axis shown in FIG 7 and FIG 8 to thereby control the orientation of the tip ball 13a. In this way, the tip ball 13a is controlled so as to be fed and come into contact with the same contact point 13b facing the reference ball 11 in the same manner even when the contact direction (referred to as Direction 1) of the tip ball 13a is different. In FIG 1, unlike in FIG 6, the position 13b represented by the black mark comes face-to-face with the reference ball 11 in all the feed directions (Directions 1). Thus, the position 13b serves as a contact point common to the contact directions.

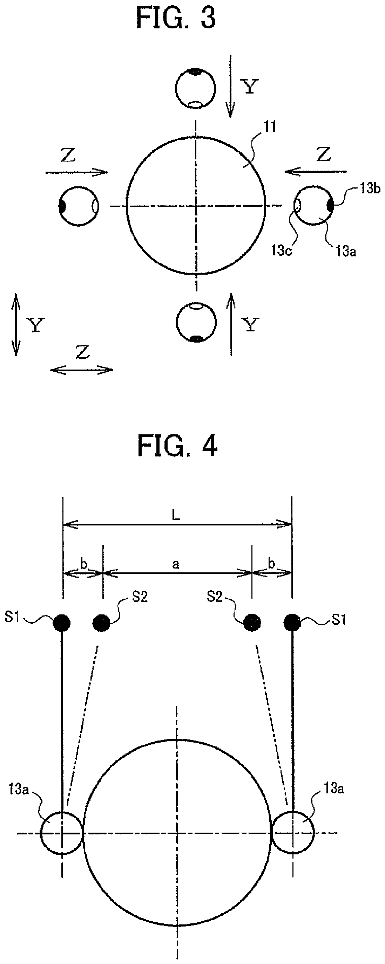

FIG 3 shows another example not falling under the scope of the claims. In FIG 3, a position 13c opposite in a diametrical direction from the position 13b of the tip ball 13a shown in FIG 1 is used as a common point of contact with the reference ball 11. In FIG 3, as in FIG 1, the orientation of the tip ball 13a is controlled to control the contact point 13c to rotate. In this way, the tip ball 13a is fed and moved and brought into contact with the reference ball 11, with the same contact point 13c facing the reference ball 11, even when the contact direction (referred to as Direction 2) is different. Also in FIG 3, unlike in FIG 6, the position 13c represented by the black mark comes face-to-face with the reference ball 11 in all the feed directions (Directions 2). Thus, the position 13c serves as a contact point common to the contact directions.

The graph of FIG 5 shows a result of a comparative examination of a difference in the amount of overshoot depending on the contact direction that was conducted to confirm the effects of the embodiments.

As shown in the schematic view of FIG 4, the amount of overshoot is from a position S1 at which the tip ball 13a having an outside diameter of 6 mm is brought into contact with the reference ball 11 having an outside diameter of 25 mm to a position S2 reached by skip feeding.

Thus, an amount of overshoot b can be obtained by the following formula:

$$b = [L(\text{reference ball diameter} + \text{tip ball diameter}) - a] \times \frac{1}{2}$$

Direction 1 in the graph of FIG 5 represents a result of measuring the amount of overshoot by controlling the tip ball 13a so as to be fed such that the contact point 13b thereof comes into contact with the reference ball 11 in the same manner (FIG 1). Direction 2 in the graph of FIG 5 represents a result of measuring the amount of overshoot by controlling the tip ball 13a so as to be fed such that the contact point 13c thereof faces a reverse direction from Direction 1 (FIG. 3).

In both cases, measurement was made in a coordinate system in which the Z- and X-directions were rotated by an amount corresponding to rotation of the A-axis or the B-axis of the tool spindle 20 to which the touch probe 12 was attached.

It was found that, while there was no large difference in the amount of overshoot depending on the angle around the A-axis or the B-axis or the feed direction of the tool spindle 20, there was a large difference in the amount of overshoot between Direction 1 and Direction 2.

Thus, it can be seen that the amount of overshoot does not vary depending on the inclination of the axis of straightforward movement or the touch probe 12. Moreover, the amount of overshoot remains substantially the same when the orientation of the tip ball 13a is controlled such that the position of the contact point 13b (FIG. 1) or the contact point 13c (FIG. 3) remains constant regardless of the feed direction.

Here, in the Z-axis direction and the Y-axis direction shown in FIG. 1 and FIG. 3, the tip ball 13a is fed and moved in the forward direction and the reverse direction along each of these axial directions. In this case, the amount of overshoot in the forward direction and the amount of overshoot in the reverse direction are substantially the same. Accordingly, the respective amounts of overshoot during feeding in the forward and reverse directions along each of the Z- and Y-directions in the positional measurement of the reference ball offset each other. This can eliminate the need to make different corrections among the feed directions along the Z- and Y-directions.

Although this is not shown in FIG. 1 and FIG. 3, the tip ball 13a is fed and moved toward the reference ball 11 also in one direction along the X-direction as shown in FIG. 2. Since the tip ball 13a is not fed in the reverse direction along the X-direction, the amount of overshoot is not offset. Therefore, one may record only this amount of overshoot in the X-direction and use the recorded amount of overshoot for correction. In this case, the orientation of the tip ball 13a can be changed by controlling the B-axis such that the contact point of the tip ball 13a fed in the X-direction matches the position 13b in FIG. 1 or the position 13c in FIG. 3. In this way, the amount of overshoot in the X-direction can be used also as the amount of correction in the Y-direction and the Z-direction.

In FIG. 1 (FIG. 3), it is not absolutely necessary that the contact points 13b (13c) during forward and reverse feeding along the Y-direction and the contact points 13b (13c) during forward and reverse feeding along the Z-direction match each other. As long as the contact points 13b (13c) during forward and reverse feeding along the Y-axis match each other, the amount of overshoot during forward feeding can be used also as the amount of correction for reverse feeding. Similarly, as long as the contact points 13b (13c) during forward and reverse feeding along the Z-direction match each other, the amount of overshoot during forward feeding can be used also as the amount of correction for reverse feeding.

Although only some embodiments of the present invention have been described in detail above, those skilled in the art will readily appreciate that many modifications are possible in the embodiments without materially departing from the novel teachings and advantages of this invention. Accordingly, all such modifications are intended to be included within scope of this invention.

**Claims**

1. A measurement method using a touch probe (12), comprising a step for controlling orientation of a tip ball (13a) of a stylus (13) by rotating the touch probe (12) to which the stylus (13) is attached and which is axially fed, such that a contact position at which the tip ball (13a) comes into contact with an object (11) to be measured remains the same when the tip ball (13a) comes into contact with a different position on the object (11),
   wherein
   the method further includes:

   a first step of axially feeding the tip ball (13a) along a forward direction of one axis (Y) and overshooting the tip ball (13a) after coming into contact with the object (11) until axial feeding of the tip ball (13a) is stopped;
   a second step for controlling orientation of the tip ball (13a) by rotating the touch probe (12);
   a third step of axially feeding the tip ball (13a) along a reverse direction of one axis (Y) and overshooting the tip ball (13a) after coming into contact with the object (11) until axial feeding of the tip ball (13a) is stopped while a first contact position at which the tip ball (13a) comes into contact with the object (11) to remains the same in the first and the third steps by performing the second step;
   a fourth step of axially feeding the tip ball (13a) along a forward direction of another axis (Z) and overshooting the tip ball (13a) after coming into contact with the object (11) until axial feeding of the tip ball (13a) is stopped;
   a fifth step for controlling orientation of the tip ball (13a) by rotating the touch probe (12); and
   a sixth step of axially feeding the tip ball (13a) along a reverse direction of another axis (Z) and overshooting the tip ball (13a) after coming into contact with the object (11) until axial feeding of the tip ball (13a) is stopped while a second contact position at which the tip ball (13a) comes into contact with the object (11) to remains the same in the fourth and the sixth steps by performing the fifth step, and
   wherein the first contact position differs from the second contact position.

2. The measurement method using a touch probe (12) according to claim 1, wherein the touch probe (12) is mounted on a tool spindle (20) of a machine tool, and the tool spindle (20) is axially fed and rotationally fed.

3. The measurement method using a touch probe (12) according to claim 2, wherein the object (11) is a reference ball attached to a spindle (10) of the machine tool, and the touch probe (12) measures a position of the reference ball.

4. The measurement method using a touch probe (12) according to claim 3, wherein:

   the tool spindle (20) is feedable and movable in directions parallel to each axis of three orthogonal axes (X, Y, Z);
   the spindle (10) is rotatable around an axis parallel to one axis (Z) of the three orthogonal axes (X, Y, Z); and
   the tool spindle (20) is rotatable around axes parallel to two other axes (X, Y) of the three orthogonal axes (X, Y, Z) other than the one axis (Z).

**Patentansprüche**

1. Messverfahren unter Verwendung einer Tastsonde (12) mit einem Schritt zum Steuern der Orientierung einer Spitzenkugel (13a) eines Taststiftes (13) durch Drehen der Tastsonde (12) an der der Taststift (13) angebracht ist und die axial vorgeschoben wird, so dass eine Kontaktposition, an der die Spitzenkugel (13a) mit einem zu messenden Objekt (11) in Kontakt kommt, gleichbleibt, wenn die Spitzenkugel (13a) mit einer anderen Position auf dem Objekt (11) in Kontakt kommt,
   wobei
   das Verfahren des Weiteren aufweist:

   einen ersten Schritt des axialen Vorschiebens der Spitzenkugel (13a) entlang einer Vorwärtsrichtung einer Achse (Y) und Überschreitens der Spitzenkugel (13a) nachdem sie mit dem Objekt (11) in Kontakt gekommen ist bis das axiale Vorschieben der Spitzenkugel (13a) gestoppt wird;
   einen zweiten Schritt des Steuern der Ausrichtung der Spitzenkugel (13a) durch Drehen der Tastsonde (12);
   einen dritten Schritt des axialen Vorschiebens der Spitzenkugel (13a) entlang einer umgekehrten Richtung einer Achse (Y) und des Überschiebens der Spitzenkugel (13a) nach dem Kontakt mit dem Objekt (11) bis das axiale Vorschieben der Spitzenkugel (13a) gestoppt wird, während eine erste Kontaktposition, bei der die Spitzenkugel (13a) mit dem Objekt (11) in Kontakt kommt, in dem ersten und dem dritten Schritt durch Ausführen des zweiten Schrittes gleich bleibt;

einen vierten Schritt des axialen Vorschiebens der Spitzenkugel (13a) entlang einer Vorwärtsrichtung einer anderen Achse (Z) und des Überschreitens der Spitzenkugel (13a) nachdem sie mit dem Objekt (11) in Kontakt gekommen ist, bis das axiale Vorschieben der Spitzenkugel (13a) gestoppt wird;

einen fünften Schritt zum Steuern der Orientierung der Spitzenkugel (13a) durch Drehen der Tastsonde (12); und

einen sechsten Schritt des axialen Vorschiebens der Spitzenkugel (13a) entlang einer umgekehrten Richtung einer anderen Achse (Z) und Überschreiten der Spitzenkugel (13a) nach dem Kontakt mit dem Objekt (11) bis das axiale Vorschieben der Spitzenkugel (13a) gestoppt wird, während eine zweite Kontaktposition in der die Spitzenkugel (13a) mit dem Objekt (11) in Kontakt kommt, im vierten und sechsten Schritt gleich bleibt, indem der fünfte Schritt ausgeführt wird und

wobei sich die erste Kontaktposition von der zweiten Kontaktposition unterscheidet.

2. Messverfahren unter Verwendung einer Tastsonde (12) nach Anspruch 1, wobei die Tastsonde (12) an einer Werkzeugspindel einer Werkzeugmaschine montiert ist und die Werkzeugspindel (20) axial und drehend vorgeschoben wird.

3. Messverfahren unter Verwendung einer Tastsonde (12) nach Anspruch 2, wobei das Objekt (11) ein an der Spindel (10) der Werkzeugmaschine befestigte Referenzkugel ist, und die Tastsonde (12) eine Position der Referenzkugel ist.

4. Messverfahren unter Verwendung einer Tastsonde (12) nach Anspruch 3, wobei:

die Werkzeugspindel (20) in Richtung parallel zu jeder Achse von drei orthogonalen Achsen (X, Y, Z) vorschiebbar und beweglich ist;

die Spindel (10) um eine zu einer Achse (Z) der drei orthogonalen Achsen (X, Y; Z) parallelen Achse drehbar ist; und

die Werkzeugspindel (20) um Achsen drehbar ist, die parallel zu zwei anderen Achsen (X, Y) der drei orthogonalen Achsen (X, Y, Z) unterschiedlich als die eine Achse (Z) verlaufen.

## Revendications

1. Procédé de mesure à l'aide d'un capteur de contact (12), comprenant une étape de commande d'orientation d'une bille de pointe (13a) d'un stylet (13) en faisant tourner le capteur de contact (12) auquel le stylet (13) est attaché et qui est apporté axialement, de sorte qu'une position de contact à laquelle la bille de pointe (13a) vient en contact avec un objet (11) à mesurer reste la même lorsque la bille de pointe (13a) vient en contact avec une position différente sur l'objet (11),

dans lequel le procédé comporte en outre :

une première étape d'apport axial de la bille de pointe (13a) suivant une direction vers l'avant d'un axe (Y) et de dépassement de la bille de pointe (13a) après qu'elle est venue en contact avec l'objet (11) jusqu'à ce qu'un apport axial de la bille de pointe (13a) soit arrêté ;

une deuxième étape de commande d'orientation de la bille de pointe (13a) en faisant tourner le capteur de contact (12) ;

une troisième étape d'apport axial de la bille de pointe (13a) suivant une direction inverse d'un axe (Y) et de dépassement de la bille de pointe (13a) après qu'elle est venue en contact avec l'objet (11) jusqu'à ce qu'un apport axial de la bille de pointe (13a) soit arrêté tandis qu'une première position de contact à laquelle la bille de pointe (13a) vient en contact avec l'objet (11) reste la même dans les première et troisième étapes en réalisant la deuxième étape ;

une quatrième étape d'apport axial de la bille de pointe (13a) suivant une direction vers l'avant d'un autre axe (Z) et de dépassement de la bille de pointe (13a) après qu'elle est venue en contact avec l'objet (11) jusqu'à ce qu'un apport axial de la bille de pointe (13a) soit arrêté ;

une cinquième étape de commande d'orientation de la bille de pointe (13a) en faisant tourner le capteur de contact (12) ; et

une sixième étape d'apport axial de la bille de pointe (13a) suivant une direction inverse d'un autre axe (Z) et de dépassement de la bille de pointe (13a) après qu'elle est venue en contact avec l'objet (11) jusqu'à ce qu'un apport axial de la bille de pointe (13a) soit arrêté tandis qu'une seconde position de contact à laquelle la bille de pointe (13a) vient en contact avec l'objet (11) reste la même dans les quatrième et sixième étapes en réalisant la cinquième étape, et

dans lequel la première position de contact diffère de la seconde position de contact.

2. Procédé de mesure à l'aide d'un capteur de contact (12) selon la revendication 1, dans lequel le capteur de contact (12) est monté sur une broche porte-outil (20) d'une machine-outil, et la broche porte-outil (20) est apportée axialement et apportée en rotation.

3. Procédé de mesure à l'aide d'un capteur de contact (12) selon la revendication 2, dans lequel l'objet (11) est une bille de référence attachée à une broche (10) de la machine-outil, et le capteur de contact (12) mesure une position de la bille de référence.

4. Procédé de mesure à l'aide d'un capteur de contact (12) selon la revendication 3, dans lequel :

la broche porte-outil (20) peut être apportée et déplacée dans des directions parallèles à chaque axe de trois axes orthogonaux (X, Y, Z) ;
la broche (10) peut tourner autour d'un axe parallèle à un axe (Z) des trois axes orthogonaux (X, Y, Z) ; et
la broche porte-outil (20) peut tourner autour d'axes parallèles à deux autres axes (X, Y) des trois axes orthogonaux (X, Y, Z) autres que l'axe (Z).

# FIG. 1

# FIG. 2

# FIG. 3

# FIG. 4

## FIG. 5

## FIG. 6

# FIG. 7

# FIG. 8

# FIG. 9

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2016083729 A
- US 20130151001 A1
- US 20100132432 A1